# EUROPÄISCHE PATENTSCHRIFT

(11) **EP 1 567 418 B1**
(45) Veröffentlichungstag und Bekanntmachung des Hinweises auf die Patenterteilung: **22.03.2006**
(21) Anmeldenummer: 04797798.8
(22) Anmeldetag: 11.11.2004
(51) Int. Cl.: B65B 51/04, B21C 47/00, F16B 45/00, B65D 85/04

(54) **WICKEL AUS EINEM VORSPRÜNGE AUFWEISENDEN METALLSTRANG**
COIL COMPRISED OF A METAL STRAND HAVING PROJECTIONS
ENROULEMENT COMPOSE D'UNE BANDE METALLIQUE PRESENTANT DES SAILLIES

(30) Priorität: 12.11.2003 DE 20317391 U
(43) Veröffentlichungstag der Anmeldung: 31.08.2005
(73) Patentinhaber: Poly-clip System GmbH & Co. KG, 60489 Frankfurt am Main (DE)
(72) Erfinder: SCHLEUCHER, Heiko, 63688 Gedern (DE)
(74) Vertreter: Eisenführ, Speiser & Partner
(86) Internationale Anmeldenummer: PCT/EP2004/012756
(87) Internationale Veröffentlichungsnummer: WO 2005/047114

(56) Entgegenhaltungen:
- EP-A1- 0 664 406
- US-A- 2 868 370
- US-A- 3 176 932
- US-A- 4 858 977

## Beschreibung

Die Erfindung betrifft einen Wickel aus einem Vorsprünge aufweisenden Metallstrang, insbesondere einem Clipstrang für Verpackungsanlagen, mit mindestens drei Windungen und einem in Abrollrichtung des Metallstrangs vom liegenden freien Ende, und mit einem Sicherungselement, das eine lösbare Verbindung des Metallstrangs im Bereich seines freien Endes mit einem zu einer anderen Windung gehörenden Abschnitt des Metallstrang oder - falls vorhanden - einer Spule so bildet, dass das freie Ende gegen Abwickeln gesichert ist. Sie betrifft ferner ein Sicherungselement für einen Wickel aus einem Vorsprünge aufweisenden Metallstrang, insbesondere einem Clipstrang für Verpackungsanlagen, mit mindestens drei Windungen und einem in Abrollrichtung des Metallstrangs vom liegenden freien Ende.

Wickel aus Metallstränge sind z.B. generell aus US-A-3 176 932 bekannt. Bei einem bekannten Wickel aus einem Strang aneinanderhängender Clips zum Verschließen beispielsweise von Wurstenden wird das ungewollte Abwickeln des Strangs durch ein am freiliegenden Ende des Metallstrangs und den angrenzenden Windungen (oder ggf. einer Spule) befestigtes Klebeband verhindert. Dessen Entfernen vor der Verarbeitung der Clips ist häufig mühsam und hängen gebliebene Reste des Klebebands können zu Störungen in der Verpackungsanlage führen.

Es ist Aufgabe der vorliegenden Erfindung, einen gegen ungewolltes Abwickeln gesicherten Wickel und eine Abwickelsicherung vorzuschlagen, mit denen ein geringer Aufwand beim Einsetzen in eine Verpackungsmaschine verursacht wird. Die Aufgabe wird erfindungsgemäß bei einem Wickel der eingangs geschilderten Art durch die Merkmale des Anspruch 1 gelöst. Auf diese Weise müssen beim Einlegen des Wickels in eine Verpackungsanlage lediglich sein freies Ende und das Sicherungselement von einander getrennt werden. Ein etwaiges Säubern des Wickels von Resten eines Klebebands entfällt. Auch ist - anders als beim Klebeband - ein unbeabsichtigtes Lösen des Sicherungselements praktisch ausgeschlossen. Einmal korrekt am Wickel platziert, ist eine weitere Kontrolle bezüglich eines sicheren Verhinderms eines Abwickelns sichergestellt Und nicht mehr notwendig.

Dadurch, dass die Verbindung zwischen dem Sicherungselement und dem Metallstrang formschlüssig ist, können auf einer kleinen Fläche vergleichsweise große Kräfte übertragen werden. Während bei Wickeln nach dem Stand der Technik relativ lange und mit einem starken Klebstoff ausgestattete Klebebänder verwendet werden müssen, ist bel einem erfindungsgemäßen Wickel eine kleine Kontaktstelle ausreichend. Entsprechend ist ein Sicherungselement mit kleinen geometrischen Abmessungen ausreichend.

Um das Sicherungselement unabhängig von der Spule fertigen zu können und ein Einsetzen zu erleichtern, ist als Sicherungselement ein separates Teil mit zwei voneinander beabstandeten Enden bevorzugt.

Eine formschlüssige Verbindung zwischen dem freien Ende des Wickels und dem Sicherungselement kann dadurch erreicht werden, dass ein erstes Ende des Sicherungselements eine Öse aufweist, die der Metallstrang vollständig durchsetzt und die einen Vorsprung erfasst, während ein zweites Ende des Sicherungselements einen Haken aufweist, der in einen Vorsprung des Metallstrangs greift. Zum Herstellen der formschlüssigen Verbindung zwischen dem Sicherungselement und dem Metallstrang wird das freie Ende durch die Öse geführt, bis der erste Vorsprung erreicht ist und die Öse hinter diesen greift. Alsdann wird der Haken hinter einen Vorsprung einer anderen Windung gehakt. Dadurch wird eine sichere Verbindung zwischen dem freien Ende und dem Sicherungselement hergestellt.

Besonders bevorzugt ist der Haken als Karabinerhaken ausgebildet Hierdurch wird verhindert, dass sich der Haken durch zufällige Bewegungen des Wickels z.B. während des Transports selbsttätig lösen kann. Gleichzeitig ist ein Einhaken mit einem Vorsprung leicht möglich.

Vorteilhaft wird das Sicherungselement vollständig aus Kunststoff hergestellt. Das gestattet eine sehr kostengünstige und schnelle Herstellung derartiger Sicherungselemente. Besonders bevorzugt ist, das Sicherungselement als ein einstückiges Spritzgussteil auszuführen.

In einer bevorzugten Ausführungsform weist das Sicherungselement ein erstes Ende mit einer Öse auf, das mit dem freien Ende des Metallstrangs verbindbar ist. Das andere Ende des Sicherungselements wird dann mit einem Vorsprung des Metallstrangs verbunden der zu einer anderen Windung gehört.

Die Erfindung wird im Folgenden anhand der Zeichnungen näher erläutert. Dabei zeigt:
- Figur 1: eine schematische perspektivische Seitenansicht eines Wickels, auf einer Spule,
- Figur 2: eine perspektivische Ansicht eines Segments eines Wickels auf einer Spule,
- Figur 3: ein Sicherungselement In Draufsicht und
- Figur 4: eine Draufsicht auf einen Wickel auf einer Spule.

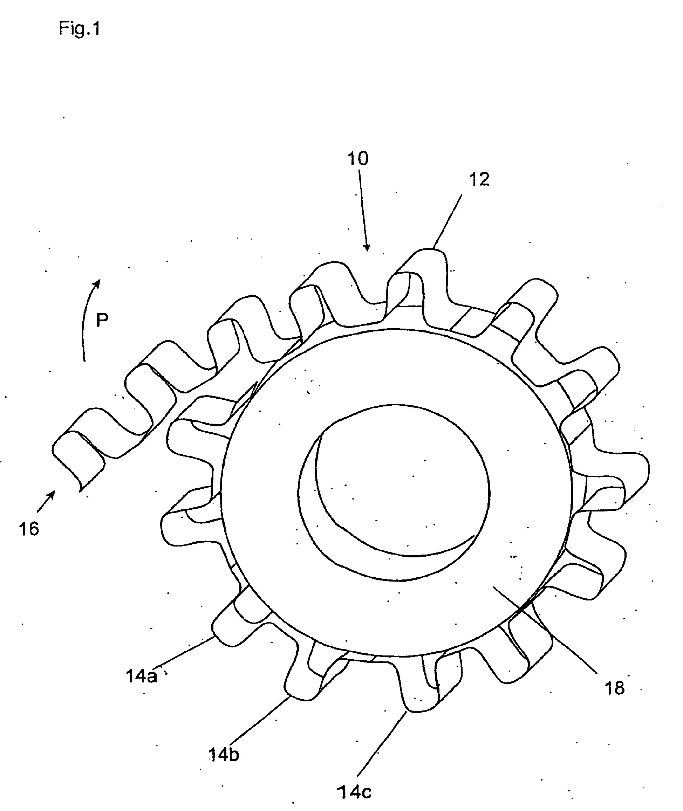

In Figur 1 ist ein Wickel 10 aus einem Metallstrang 12 gezeigt, der etliche Vorsprünge 14a, 14b, 14c ... aufweist. Im gezeigten Ausführungsbeispiel sind die Vorsprünge 14 als Ausbuchtungen des Metallstrangs 12 ausgebildet. Durch Trennen des Metallstrangs 12 zwischen je zwei Vorsprüngen werden Clips für Verpackungsanlagen erhalten. Der Metallstrang ist auf eine Spule 18 aufgewickelt und weist nur eine einzige Windung auf. In Abrollrichtung des Metallstrangs 12 vorn befindet sich ein freies Ende 16. Ohne Befestigung würde sich das freie Ende 16 in Richtung des Pfeils P von der Spule 18 wegbewegen.

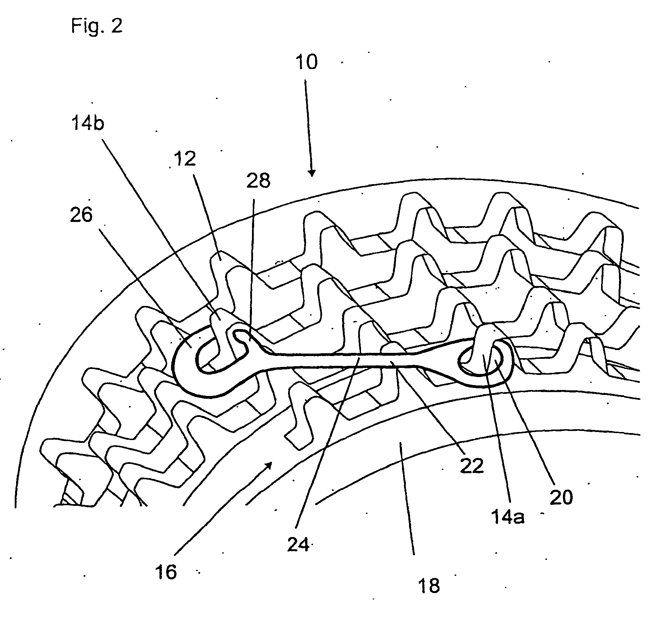

Figur 2 zeigt eine perspektivische Ansicht eines Segments des Wickels 10 auf der Spule 18, der drei Windungen aufweist. Im Bereich des freien Endes 16 durchsetzt der Metallstrang 12 eine Öse 20 eines Sicherungselements 22. Die Öse 20 befindet sich im Bereich des Vorsprungs 14a und greift In ihn so ein, dass eine formschlossige Verbindung hergestellt ist.

Über einen Schaft 24 ist die Öse 20 mit einem Haken 26 verbunden, der als Karabinerhaken ausgeführt ist. Der Haken 26 greift in den Vorsprung 14b ein und bildet mit ihm eine formschlüssige Verbindung. Eine Klinke 28, die einen Teil des Karabinerhakens bildet, verhindert dabei, dass sich das Sicherungselement 22 vom Metallstrang lösen kann. Auf diese Art und Weise wird verhindert, dass das freie Ende 16 relativ zu den restlichen Windungen des Wickels 10 beweglich ist.

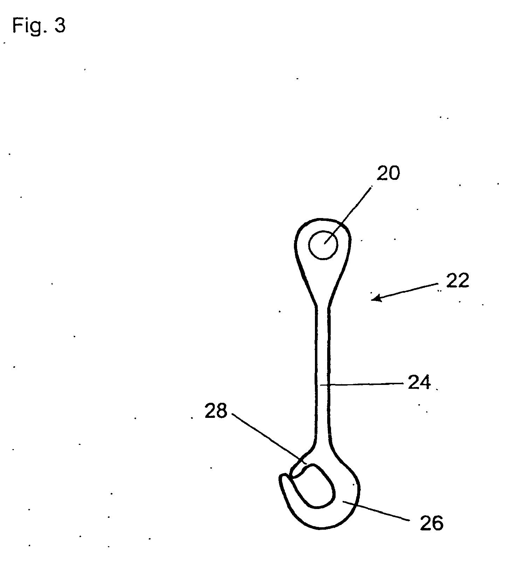

Figur 3 zeigt ein erfindungsgemäßes Sicherungselement 22 mit einer Öse 20, einem Schaft 24, einem Haken 26 und einer Klinke 28. Die lichten Durchmesser der Öse 20 und des Hakens 26 sind dabei so gewählt, dass sie in Einbaulage des Sicherungselements 22 vom Metallstrang 12 vollständig durchsetzt sind.

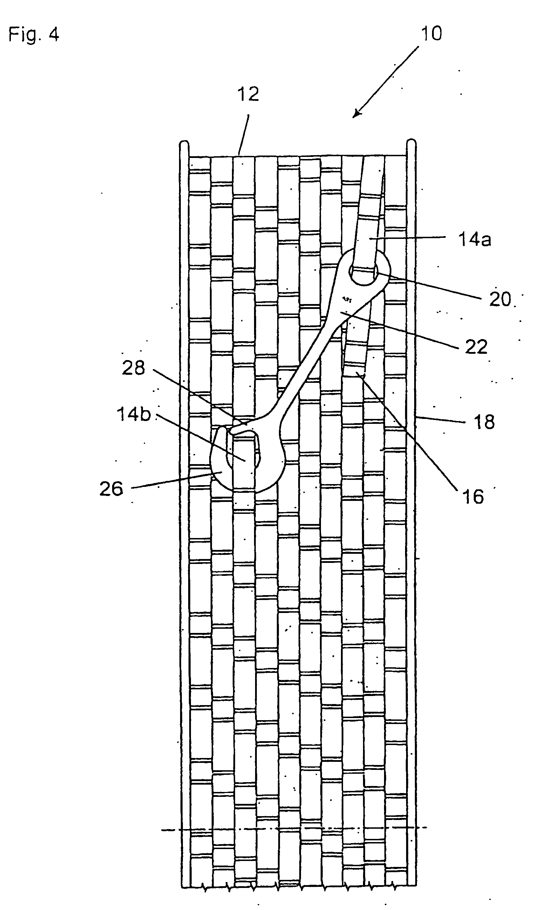

In Figur 4 ist ein aus zehn Windungen bestehender Wickel 10 gezeigt, bei dem die Vorsprünge durch Markierungen auf dem Metallstrang 12 angedeutet sind. Die Öse 20 ist so vom Vorsprung 14a des Metallstrangs 12 durchsetzt, dass beide eine formschlüssige Verbindung bilden. Der Haken 26 greift in den Vorsprung 14b ein, der zu einer anderen Windung gehört als das freie Ende 16, und bildet mit ihm ebenfalls eine formschlüssige Ve rbindung. Durch diese Verbindung ist das freie Ende 16 gegen Abwickeln gesichert.

### Bezugszeichen

- 10: Wickel
- 12: Metallstrang
- 14: Vorsprung
- 16: freies Ende
- 18: Spule
- 20: Öse
- 22: Sicherungselement
- 24: Schaft
- 26: Haken
- 28: Klinke

## Patentansprüche

1. Wickel (10) aus einem Vorsprünge (14) aufweisenden Metallstrang (12), insbesondere einem Clipstrang für Verpackungsanlagen, mit mehreren Windungen und einem in Abrollrichtung des Metallstrangs (12) vom liegenden freien Ende (16), und mit einem Sicherungselement (22), das eine lösbare Verbindung des Metallstrangs (12) im Bereich seines freien Endes (16) mit einem zu einer anderen Windung gehörenden Abschnitt des Metallstrangs (12) so bildet, dass das freie Ende gegen Abwickeln gesichert ist,
**dadurch gekennzeichnet, dass** die Verbindung formschlüssig ist, wobei das Sicherungselement (22) ein separates Teil mit zwei von einander beabstandeten Enden ist, von welchen ein erstes Ende des Sicherungselements eine Öse (20) aufweist, die der Metallstrang vollständig durchsetzt und die einen Vorsprung erfasst, und ein zweites Ende des Sicherungselements einen Haken (26) aufweist, der in einen Vorsprung (14) einer anderen Windung des Metalistangs (12) greift.

2. Wickel nach Anspruch 1,
**dadurch gekennzeichnet, dass** der Haken (26) als Karabinerhaken ausgebildet ist.

3. Wickel nach einem der vorstehenden Ansprüche,
**dadurch gekennzeichnet, dass** das Sicherungselement vollständig aus Kunststoff besteht.

4. Wickel nach Anspruch 3,
**dadurch gekennzeichnet, dass** das Sicherungselement (22) ein einstückiges Spritzgussteil ist.

## Claims

1. A coil (10) comprising a metal strip (12) having projections (14), in particular a clip strip for packaging installations, comprising a plurality of windings and a free end (16) which is the leading end in the unwinding direction of the metal strip (12), and a securing element (22) which forms a releasable connection of the metal strip (12) in the region of its free end (16) to a portion, belonging to another winding, of the metal strip (12) so that the free end is secured to prevent it from unwinding,
**characterised in that** the connection is positively locking, wherein the securing element (22) is a separate part with two mutually spaced ends of which a first end of the securing element has an eye (20) through which the metal strip passes completely and which engages a projection and a second end of the securing element has a hook (26) which engages into a projection (14) of another winding of the metal strip (12).

2. A coil according to claim 1 **characterised in that** the hook (26) is in the form of a snap engagement hook.

3. A coil according to one of the preceding claims **characterised in that** the securing element completely consists of plastic material.

4. A coil according to claim 3 **characterised in that** the securing element (22) is a one-piece injection moulding.

## Revendications

1. Enroulement (10) constitué d'une bande métallique (12) présentant des saillies (14), notamment d'une bande de clips pour des installations d'emballage, avec plusieurs spires et une extrémité libre (16) située à l'avant dans la direction de déroulement de la bande métallique, et avec un élément d'assujettissement (22) qui forme une liaison amovible de la bande métallique (12) dans la région de son extrémité libre (16) avec une partie de la bande métallique (12) appartenant à une autre spire de telle sorte que l'extrémité libre est empêchée de se dérouler,
**caractérisé en ce que** la liaison est à engagement positif, sachant que l'élément d'assujettissement (22) est une pièce séparée ayant deux extrémités mutuellement distantes, une première extrémité de l'élément d'assujettissement présentant un oeillet (20) qui traverse en totalité la bande métallique et qui embrasse une saillie, et une deuxième extrémité de l'élément d'assujettissement présentant un crochet (26) qui s'engage dans une saillie (14) d'une autre spire de la bande métallique (12).

2. Enroulement selon la revendication 1, **caractérisé en ce que** le crochet (26) est réalisé sous forme de mousqueton.

3. Enroulement selon l'une des revendications précédentes, **caractérisé en ce que** l'élément d'assujettissement est réalisé entièrement en matière plastique.

4. Enroulement selon la revendication 3, **caractérisé en ce que** l'élément d'assujettissement (22) est une pièce moulée par injection d'un seul tenant.
